# EUROPÄISCHE PATENTSCHRIFT

(11) **EP 4 248 434 B1**
(45) Veröffentlichungstag und Bekanntmachung des Hinweises auf die Patenterteilung: **14.01.2026**
(21) Anmeldenummer: 22706534.9
(22) Anmeldetag: 02.02.2022
(51) Int. Cl.: G09F 3/03

(54) **PLOMBE**
SEAL
SCEAU

(30) Priorität: 20.05.2021 EP 21174866
(43) Veröffentlichungstag der Anmeldung: 27.09.2023
(73) Patentinhaber: Service Impex Costa Dorada S.L., 43840 Salou Tarragona (ES)
(72) Erfinder: CERBARI, Alexandru, 43840 Salou Tarragona (ES)
(74) Vertreter: Jeck, Jonathan
(86) Internationale Anmeldenummer: PCT/EP2022/052496
(87) Internationale Veröffentlichungsnummer: WO 2022/242918

(56) Entgegenhaltungen:
- WO-A1-2020/157345
- CH-A- 170 891
- DE-U1- 29 506 104
- US-A- 6 098 253

## Beschreibung

Die Erfindung betrifft eine Plombe gemäß dem Oberbegriff des Anspruchs 1.

Die Plombe besteht aus einem Plombenkörper und einem Plombenband. Um auch extremen Witterungseinflüssen zu trotzen, besteht sie aus verwitterungsresistentem Material. Heutzutage handelt es sich dabei typischerweise um Metall oder Kunststoff.

Beim Verplomben wird das Plombenband in einem Bogen zu einer Bucht gelegt. Das Plombenband wird hierbei durch zwei gegenüberliegende Öffnungen an sich beim Öffnen oder beim Betätigen voneinander entfernenden Elementen hindurchgeführt.

Die gegenüberliegenden Öffnungen sind beispielsweise Teil eines Verschlusses. Nachdem so die Bucht gelegt ist, wird anschließend das Plombenband mittels des Plombenkörpers zu einer Schlaufe festgelegt. Die Schlaufe ist dabei so bemessen, dass sie, um entfernt zu werden, irreversibel zerstört werden muss. Die Schlaufe muss beispielsweise entfernt werden, um Zugang zu einem Behälterinhalt oder zu einem Gerät zu erlangen, oder um eine Einstellung zu verändern.

Der Begriff Schlaufe bezeichnet in diesem Dokument ein feststehendes Auge in Tau und/oder Bandwerk. Das feststehende Auge löst sich nicht und zieht nicht zu.

Weil eine Plombe nur durch Zerstörung entfernt werden kann, trägt sie im besten Fall besten Fall zum Müllaufkommen bei. Im schlechtesten Fall erfährt sie spontanen Eintrag in die Umgebung. Beides ist dem Umweltschutz abträglich.

Durch DE 295 06 104 U1 ist eine Plombe aus einem Kartonmaterial bekannt. Plombenkörper und Plombenband sind einstückig. Vom Plombenkörper geht das Plombenband aus. Der Plombenkörper besteht aus zwei aufeinanderklappbaren Teilen. Die beiden Teile sind mit einer Klebeschicht versehen. In einem Betriebszustand der Plombe ist der Plombenkörper mit einer von ihm beabstandeten Partie des Plombenbands unlösbar versiegelbar. Hierbei ist die vom Plombenkörper entfernte Partie des Plombenbands zwischen den beiden Teilen des Plombenkörpers hindurchgeführt und verklebt.

Durch CH 170 891 A ist eine Reklameplombe bekannt. Sie besteht aus einem Plombenkörper und einer Reklamemarke. Der Plombenkörper verbindet ein- und austretende Plombenbandpartien. Die Reklamemarke umrahmt den Plombenkörper, Sie verdeckt die in den Plombenkörper ein- und austretenden Plombenbandpartien. Die Reklamemarke ist nur nach Lösen der Plombe vom Plombenkörper ablösbar.

Durch WO 2020/157345 A1 ist ein Sicherheitsetikett bekannt, welches ein Sicherungsband umfasst. Das Sicherungsband verfügt an seinen beiden distalen Enden über unlösbar ineinanderführbare Endstücke. Die beiden Endstücke sind vom Typ männlich und weiblich ausgeführt. Das, Sicherungsband besteht aus Cellulose oder einem Derivat hiervon. Die Endstücke bestehen aus biologisch abbaubarem Kunststoff.

Durch US 6,098,253 ist ein einstückiges Verbindungsmittel bekannt. Das Verbindungsmittel dient der Befestigung eines Skipasses an der Bekleidung eines Skifahrers. Das Verbindungsmittel ist aus einem biologisch abbaubaren Material hergestellt. Es weist eine bandförmige Partie mit zwei Endstücken auf. Die Endstücke sind vom Typ männlich/weiblich. Zum Verbinden wird das männliche Endstück durch eine Öffnung im weiblichen Endstück hindurchgesteckt.

Durch US 3,045,303 ist eine Plombe mit einem Plombenkörper und einem Plombenband bekannt. Der Plombenkörper kann aus nachwachsenden Rohstoffen bestehen. Nachwachsende Rohstoffe sind beispielsweise organische Cellulosederivate, wie etwa Celluloseether, Celluloseester, Das Plombenband kann ebenfalls aus organischen Cellulosederivaten bestehen. Bei diesen organischen Cellulosederivaten handelt es sich zum Beispiel um plastifiziertes Celluloseacetat oder Celluloseacetatbutyrat. Der Plombenkörper ist zumindest mit zwei voneinander beabstandeten Partien des Plombenbands lösbar verbindbar. In einem Betriebszustand ist der Plombenkörper mit den zwei voneinander beabstandeten Partien des Plombenbands unlösbar versiegelbar. Der Plombenkörper kann aus zwei zumindest miteinander in einem Betriebszustand unlösbar versiegelbar verbindbaren Teilen bestehen. In einer Ausgestaltung, bei der die beiden Teile aus Metall oder halbstarrem Kunststoff bestehen, können die beiden Teile mit einer Rippe federelastisch gelenkig miteinander verbunden sein. Zwischen den beiden Teilen ist ein Kunststoffmaterial angeordnet, das unter Druck zu fließen beginnt. Nachdem die voneinander beabstandeten Partien des Plombenbands durch den Plombenkörper hindurchgeführt und das Plombenband angezogen wurde, wird der Plombenkörper durch Druck abgeflacht. Der Druck zwingt den Kunststoff, das Plombenband und die Zwischenräume zwischen den einzelnen Fasern des Plombenbands zu kontaktieren, zu binden oder in sie einzudringen. Hierdurch werden die voneinander beabstandeten Partien des Plombenbands an den Plombenkörper gebunden. Außerdem wird hierdurch eine Relativbewegung der Plombenbänder innerhalb des Plombenkörpers verhindert. Die Zugfestigkeit der Plombenbänder wird hierbei nicht wesentlich zu verringert.

Nachteilig an dieser Plombe ist die komplizierte Handhabung bei ihrer Verwendung.

Durch US 2010/212117 A1 ist eine Plombe in der Art eines Kabelbinders aus biologisch abbaubarem Werkstoff bekannt. Die Plombe ist mit einem Plombenkörper und einem Plombenband ausgeführt. Das Plombenband ist einseitig am Plombenkörper festgelegt. In einem Betriebszustand ist der Plombenkörper mit einer Partie des Plombenbands verbindbar. In dem Betriebszustand ist eine zerstörungsfreie Trennung der Partie vom Plombenkörper unmöglich. Die Partie des Plombenbands ist vom Plombenkörper zu dem freien Ende des Plombenbands beabstandet.

Nachteilig an dieser Plombe ist die Möglichkeit des Nachzurrens in der Art eines Kabelbinders. Hierdurch wird kein feststehendes Auge durch das Plombenband gebildet. Stattdessen ist das Auge nachträglich verkleinerbar. Dies kann absichtlich oder unabsichtlich geschehen. Das Auge kann hierdurch auf ein Maß verkleinert werden, welches kleiner ist, als ein maximaler Bewegungsspielraum der Plombe.

Bei einer nachträglichen Verkleinerung des Auges kann so eine unbeabsichtigte und unkontrollierte Zerstörung der Plombe herbeigeführt werden.

Durch US 2004/032332 A1 ist ebenfalls eine Plombe in der Art eines Kabelbinders aus biologisch abbaubarem Werkstoff bekannt. Die Plombe ist mit einem Plombenkörper und einem Plombenband ausgeführt. Das Plombenband ist einseitig am Plombenkörper festgelegt. Der Plombenkörper ist in einem Betriebszustand mit einer Partie des Plombenbands verbindbar. Die Partie ist vom Plombenkörper zu dem freien Ende des Plombenbands beabstandet. Die Verbindung ist derart ausgebildet, dass eine zerstörungsfreie Trennung der Partie vom Plombenkörper unmöglich ist. Um ein Nachzurren zu verhindern, kann ein Klebstoff in die Durchführung für das freie Ende des Plombenbands im Plombenkörper eingebracht oder freigesetzt werden.

Nachteilig an dieser Plombe ist die erheblich erschwerte Handhabung der Plombe. Die Handhabung ist erschwert durch Einbringen oder Freisetzen von Klebstoff in die Durchführung des Plombenbands im Plombenkörper.

Ebenfalls nachteilig ist die erheblich geschmälerte Umweltverträglichkeit der Plombe. Die Umweltverträglichkeit ist dadurch erheblich geschmälert, weil Klebstoff während der Lagerung und der Handhabung der Plombe unkontrolliert in die Umgebung entweichen kann.

Durch FR 2 799 864 A1 ist eine Plombe mit einem Plombenkörper und einem Plombenband bekannt. Die Plombe besteht aus einem Kunststoffband mit einer Befestigung aus männlichen und weiblichen Verbindungen. Diese können nicht geöffnet werden, ohne die Plombe zu zerstören. Das Plombenband ist einseitig am Plombenkörper festgelegt. Der Plombenkörper besteht aus zwei zumindest miteinander in einem Betriebszustand unlösbar versiegelbar verbindbaren Teilen. Die beiden Teile sind gelenkig miteinander verbunden. Die zwei miteinander in einem Betriebszustand unlösbar versiegelbar verbindbaren Teile sind miteinander verklebbar. Hierzu ist eine Klebeschicht zwischen den miteinander in einem Betriebszustand unlösbar versiegelbar verbundenen Teilen angeordnet.

Nachteilig an der filigranen Konstruktion ist, dass das freie Ende des Plombenbands bereits mit der Klebeschicht in Kontakt kommt, bevor der Plombenkörper durch Aufeinanderklappen der beiden gelenkig miteinander verbundenen Teile fertiggestellt ist.

Nachteilig an der filigranen Konstruktion ist alternativ, dass das freie Ende des Plombenbands bereits während des Einführens in den Plombenkörper blockiert wird.

Auch erlaubt die Konstruktion der Plombe, keine zufriedenstellende Anpassung der Weite des herzustellenden Auges, nachdem das freie Ende des Plombenbands in den Plombenkörper eingeschoben ist. Dies hat vorher durch Kürzen des freien Endes zu erfolgen. Hierdurch ist die Handhabung der Plombe erheblich erschwert. Darüber hinaus kann nicht sichergestellt werden, dass beim Kürzen des freien Endes der anfallende Abschnitt des Plombenbands kontrolliert in die Umgebung eingebracht wird.

Durch US 2,639,479 ist ein Klebesiegel bekannt. Das Klebesiegel besteht aus einer Unterlasche, einer Oberlasche und einem Sicherungsband. Die Unterlasche ist mit einer Durchführungsöffnung für die Enden des Sicherungsbands versehen. Die Oberlasche ist gelenkig mit der Unterlasche verbunden. Die Durchführungsöffnung kann als ein vom Rand der Unterlasche eingearbeiteter Schlitz oder als ein zentrales Loch ausgeführt sein. Ein Band, wie etwa ein Paket- oder ein Geschenkband) wird mit seinen freien Enden durch die Durchführungsöffnung gelegt.

Durch Aufeinanderklappen der Oberlasche auf die Unterlasche werden die beiden Partien des Bands durch die auf der der Oberlasche zugewandten Seite der Unterlasche angeordnete Klebeschicht fixiert.

Auf der der Oberlasche abgewandten Seite der Unterlasche ist eine Klebeschicht angeordnet, mit der das Klebesiegel mit dem Band am Paket oder Geschenk festgelegt wird.

Nachteilig ist hier die Verklebung mit dem zu versiegeInden Gegenstand, beispielsweise einem wiederverwendbaren Behältnis. Dadurch muss der Gegenstand nach Entfernung des Siegels gereinigt werden. Dies geht einher mit einer unnötigen Umweltbelastung.

Aufgabe der Erfindung ist es, eine umweltverträgliche Plombe mit verbesserter Handhabung und verbessertem Schutz vor nachträglicher Veränderung zu schaffen.

Die Aufgabe wird durch die Merkmale des Anspruchs 1 gelöst.

Vorteilhafte Ausführungsformen der Erfindung gehen aus den Unteransprüchen hervor.

Die Erfindung ist jedenfalls dann verwirklicht, wenn sich um eine Plombe mit einem Plombenkörper sowie einem Plombenband handelt, die vorzugsweise biologisch abbaubaren Werkstoff bestehen.

Besonders bevorzugt besteht der biologisch abbaubare Werkstoff zumindest teilweise aus eigen-kompostierbarem Material.

Durch die Verwendung eines biologisch abbaubaren Werkstoffs zumindest für den Plombenkörper wird die Umweltbilanz der Plombe im Vergleich zum Stand der Technik erheblich verbessert. Wird die Plombe spontan in die Umgebung eingetragen, kompostiert sie sich im Laufe der Zeit von selbst. Wird sie ordnungsgemäß entsorgt, beispielsweise in den Haus- oder Gewerbemüll, sorgt ihre selbständige Kompostierfähigkeit für eine Verringerung des Gesamtmüllaufkommens.

Zusätzliche, über die vollständige Lösung der gestellten Aufgabe und/oder über die voran genannten Vorteile hinausgehende Vorteile gegenüber dem Stand der Technik sind nachfolgend aufgeführt.

Die Erfindung wird nachfolgend anhand von in der Zeichnung dargestellten Ausführungsbeispielen näher erläutert. Die Größenverhältnisse, der einzelnen Elemente zueinander in den Figuren entsprechen nicht immer den realen Größenverhältnissen. Einige Formen sind vereinfacht und andere Formen zur besseren Veranschaulichung vergrößert im Verhältnis zu anderen Elementen dargestellt. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein erstes Ausführungsbeispiel einer Plombe im Ausgangszustand und Draufsicht, auf ihrer ersten Flachseite,
- Fig. 2: die Plombe aus Fig. 1 in gegenüberliegender Flachseite,
- Fig. 3: die Plombe aus Fig. 1 in dem Ausgangszustand in einer Seitenansicht ihrer Längsseite,
- Fig. 4: die Plombe aus Fig. 1 in dem Ausgangszustand in einer Seitenansicht ihrer Schmalseite,
- Fig. 5: die Plombe aus Fig. 1 in dem Ausgangszustand in einer perspektivischen Ansicht,
- Fig. 6: Plombe nach Fig. 1 in einen Zwischenzustand überführte in einer Draufsicht auf ihre erste Flachseite,
- Fig. 7: die Plombe aus Fig. 6 im Zwischenzustand in einer Draufsicht,
- Fig. 8: die Plombe aus Fig. 6 in dem Zwischenzustand in einer Seitenansicht ihrer Längsseite,
- Fig. 9: die Plombe aus Fig. 6 in dem Zwischenzustand in einer perspektivischen Ansicht,
- Fig. 10: die aus dem Zwischenzustand überführte Plombe aus Fig. 6 in einer Draufsicht, in ihrer ersten Flachseite,
- Fig. 11: die Plombe aus Fig. 10 in dem Betriebszustand in einer Seitenansicht ihrer Längsseite,
- Fig. 12: die Plombe aus Fig. 10 in dem Betriebszustand in einer Seitenansicht ihrer Schmalseite,
- Fig. 13: die Plombe aus Fig. 10 in dem Betriebszustand in einer perspektivischen Ansicht,
- Fig. 14: die Einzelteile einer Plombe gemäß eines zweiten Ausführungsbeispiels mit:
- Fig. 14a: einem Plombenkörper in aufgeklapptem Zustand in einer Draufsicht

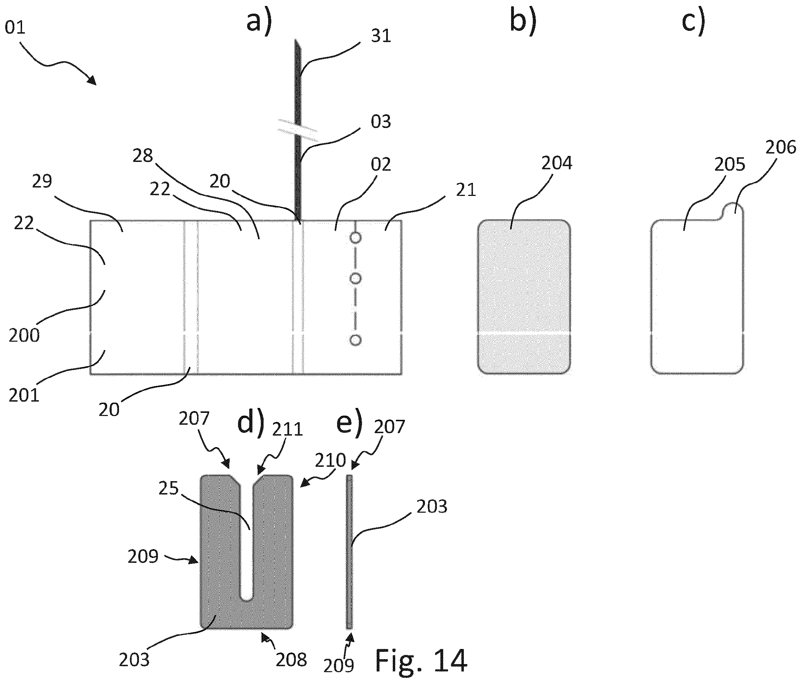

- Fig. 14 b: einen ersten Plombenkernklebeblatt in einer Draufsicht,
- Fig. 14 c: einem zweiten Plombenkernklebeblatt in einer Draufsicht,
- Fig. 14 d: einem Plombenkern in einer Draufsicht und
- Fig. 14 e: dem Plombenkern aus Fig. 14 d in einer Seitenansicht

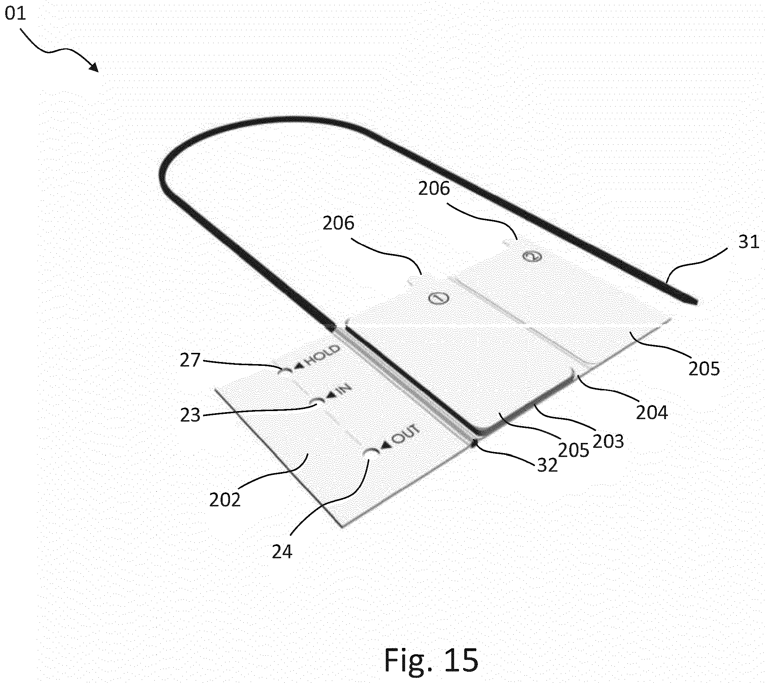

- Fig. 15: die Plombe aus Fig. 14 in einem Ausgangszustand in ihrer ersten Flachseite und

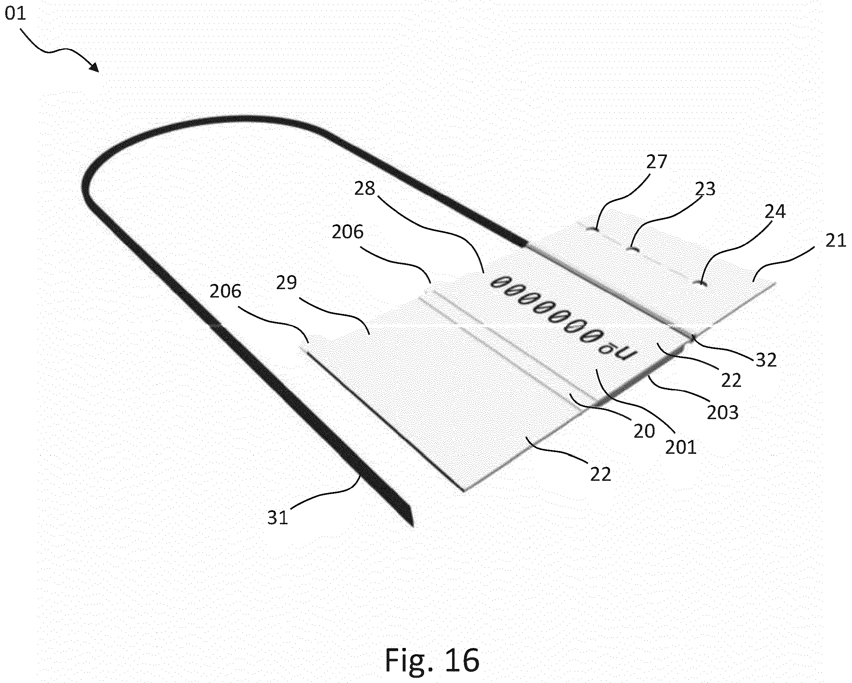

- Fig. 16: die Plombe aus Fig. 14 in dem Ausgangszustand in einer perspektivischen Ansicht auf deren ihrer ersten Flachseite gegenüberliegende Flachseite.

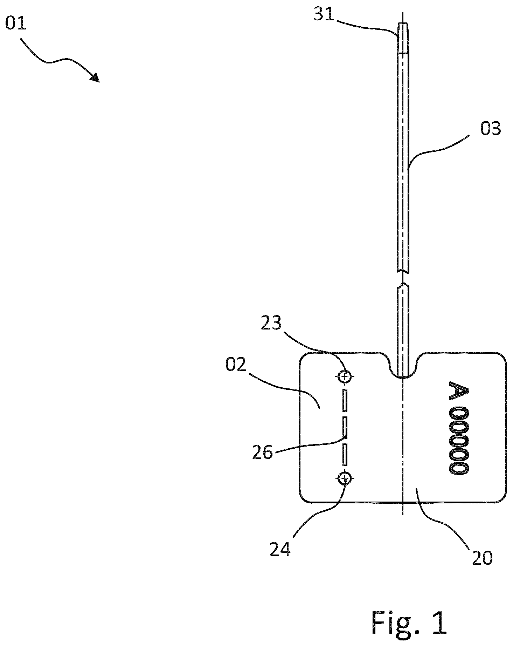

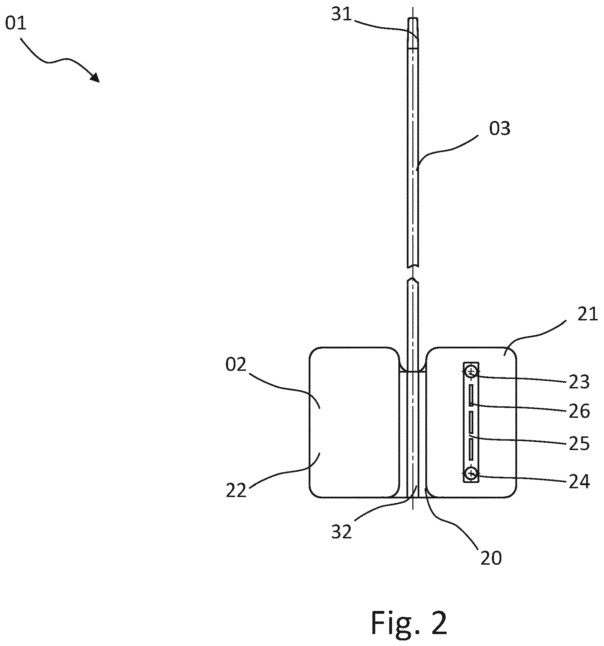

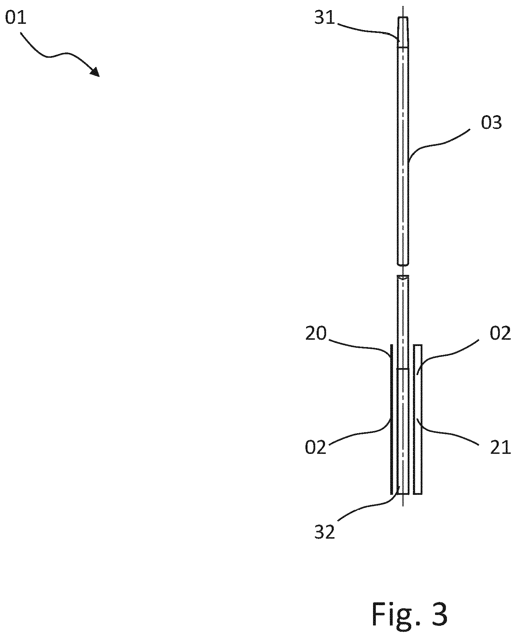

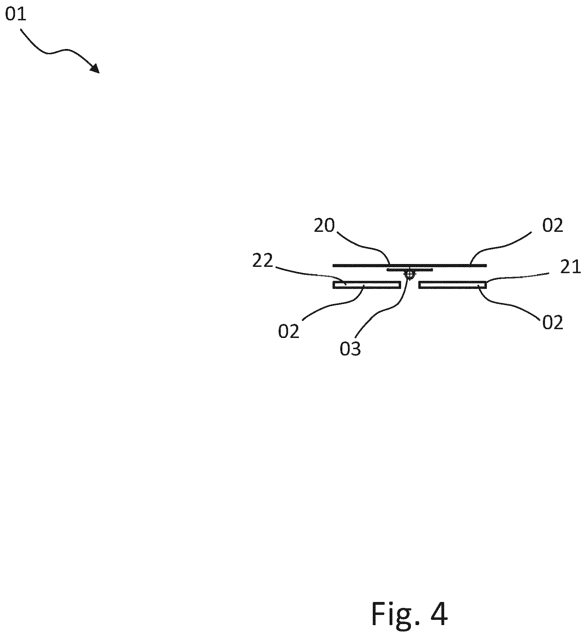

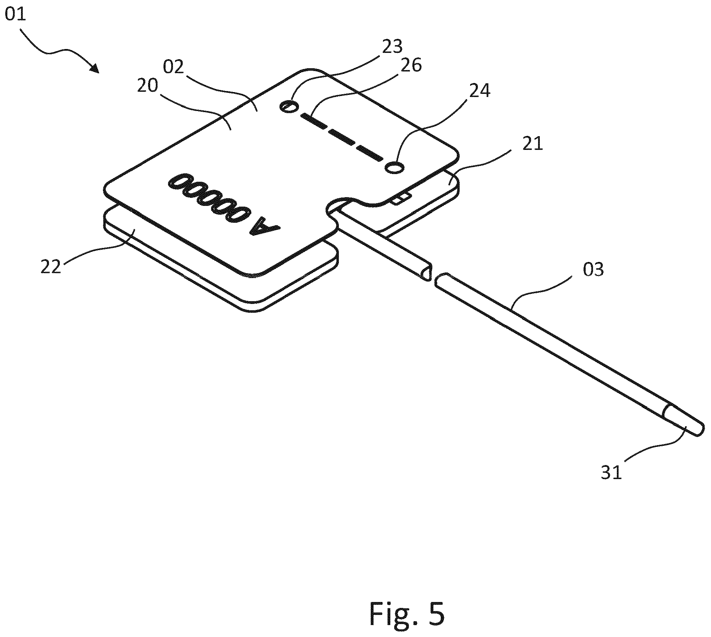

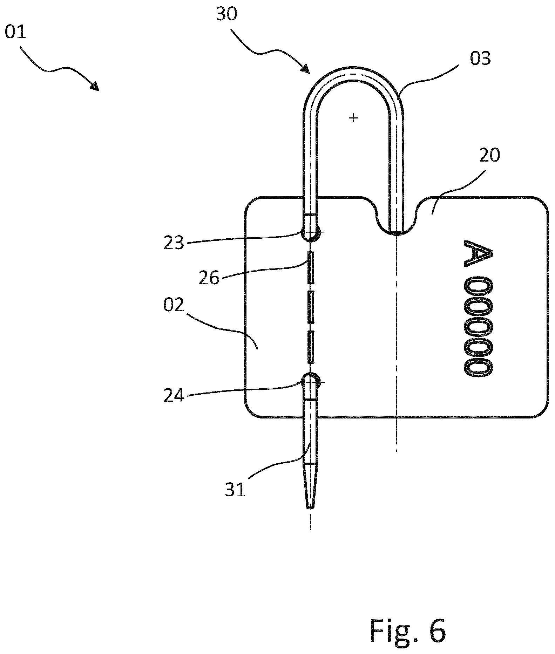

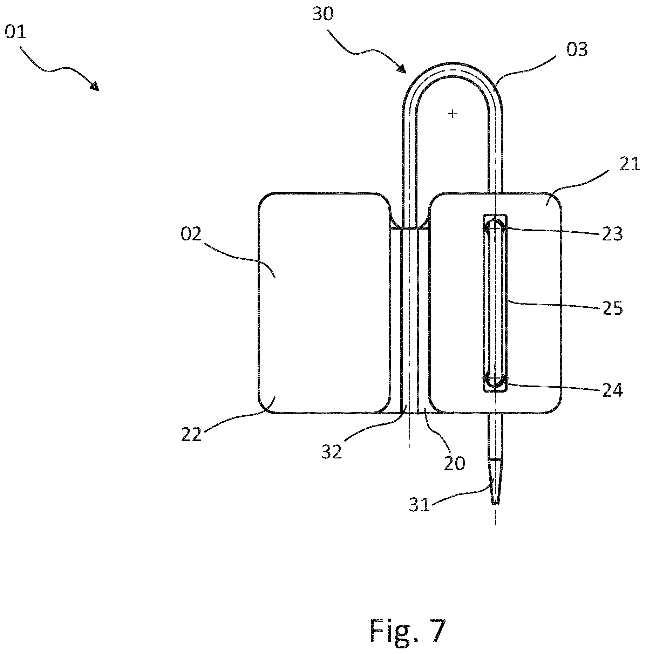

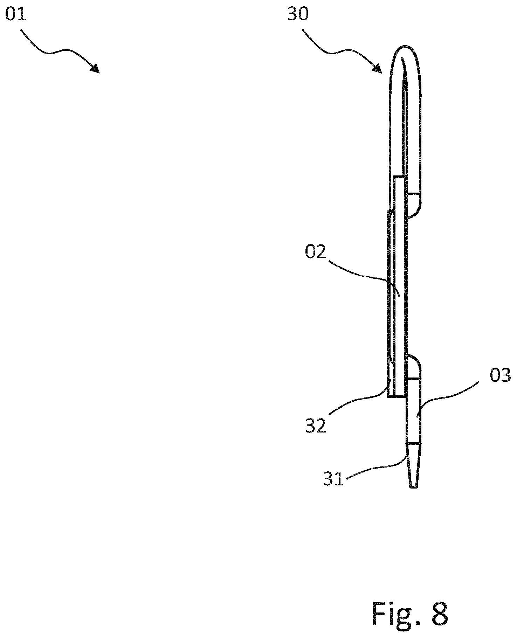

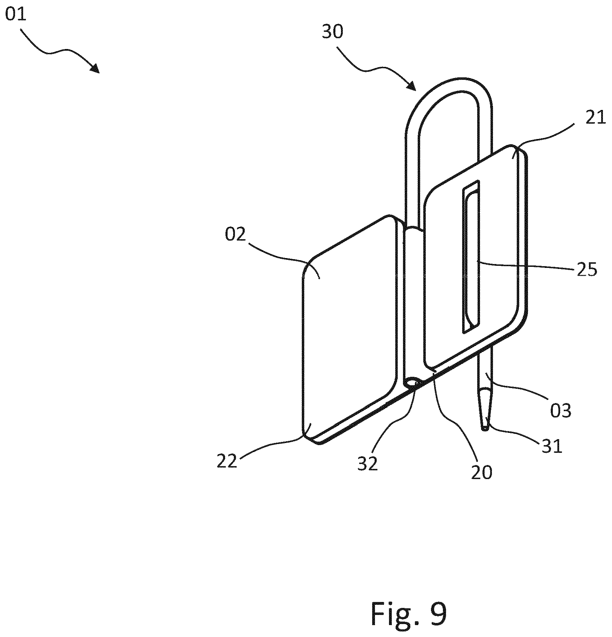

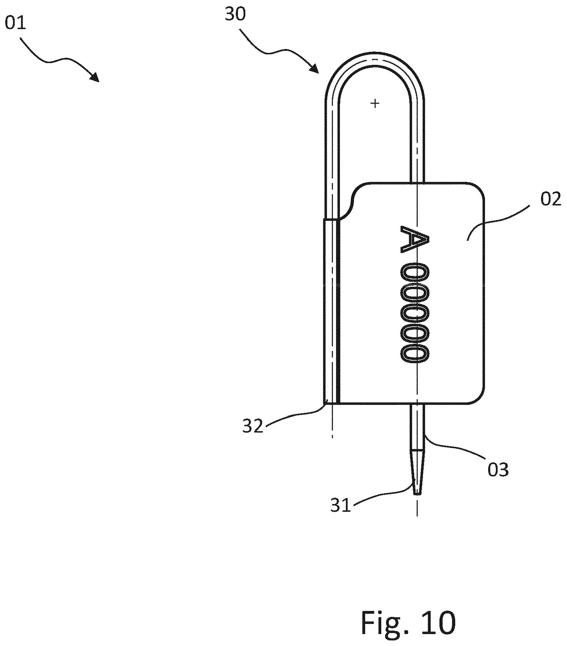

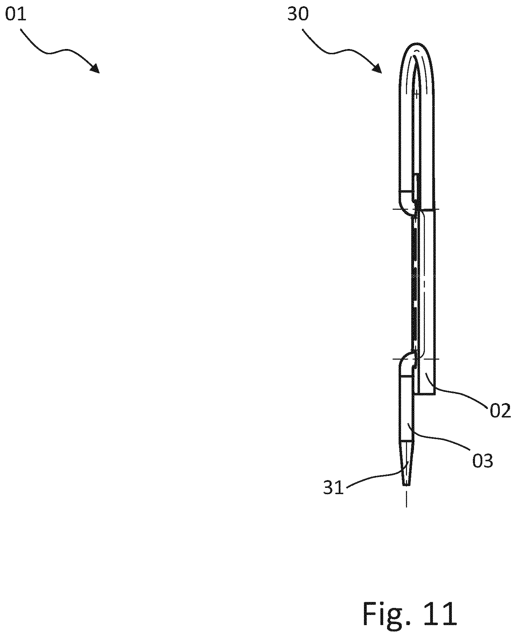

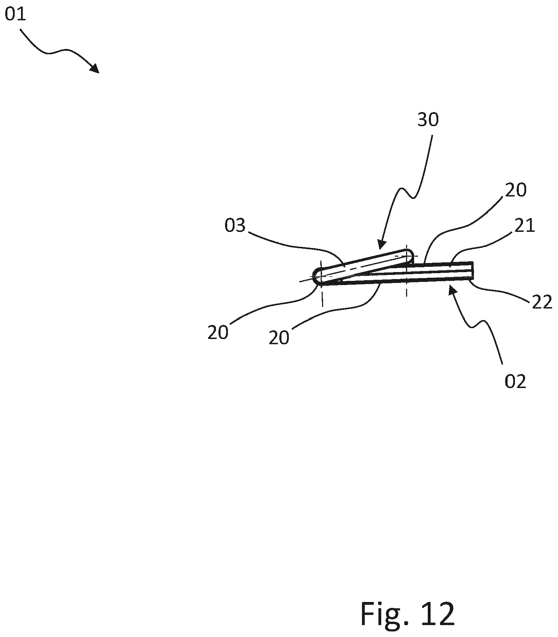

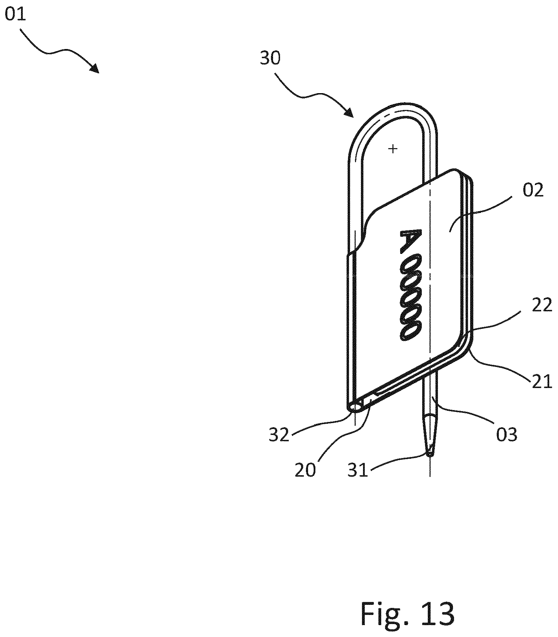

Eine in Fig. 1, Fig. 2, Fig. 3, Fig. 4, Fig. 5, Fig. 6, Fig. 7, Fig. 8, Fig. 9, Fig. 10, Fig. 11, Fig. 12, Fig. 13, Fig. 14, Fig. 15, Fig. 16 ganz oder in Teilen dargestellte Plombe 01 umfasst:
- einen Plombenkörper 02 und
- ein ausgehend von einem Ausgangszustand (Fig. 1, Fig. 2, Fig. 3, Fig. 4, Fig. 5, Fig. 15, Fig. 16) zur Überführung in einen Zwischenzustand (Fig. 6, Fig. 7, Fig. 8, Fig. 9), an dem Plombenkörper 02 zu einer Schlaufe 30 legbares und zum Erhalt eines Betriebszustands (Fig. 10, Fig. 11, Fig. 12, Fig. 13) mit dem Plombenkörper 02 betriebsgemäß verbindbares Plombenband 03.

Zumindest der Plombenkörper 02 besteht aus einem biologisch abbaubaren Werkstoff.

Bevorzugt besteht hiernach zumindest der Plombenkörper 02 aus einem oder mehreren biologisch abbaubaren Werkstoffen.

Vorzugsweise bestehen sämtliche Funktionsteile der Plombe 01 aus einem oder mehreren biologisch abbaubaren Werkstoffen.

Besonders bevorzugt besteht die gesamte Plombe 01 aus einem oder mehreren biologisch abbaubaren Werkstoffen.

Mit anderen Worten umfasst die Plombe 01 das Plombenband 03 als ein flexibles Mittel mit zwei Endpartien 31, 32, die mit dem Plombenkörper 02 betriebsgemäß verbindbar sind.

Die Plombe 01 kann auch als Siegel bezeichnet werden.

Das flexible Mittel kann als ein flexibler Streifen ausgeführt sein.

Das flexible Mittel und/oder der flexible Streifen können als ein Seil und/oder eine Kette ausgebildet sein.

Das flexible Mittel und/oder der flexible Streifen können ein Seil und/oder eine Kette umfassen.

Die Plombe 01 zeichnet sich dadurch aus, dass beispielsweise zumindest die Funktionsteile der Plombe 01 aus biologisch abbaubarem Werkstoff bestehen.

Biologisch abbaubare Werkstoffe, kurz BAW, müssen innerhalb von 6 - 10 Wochen in einer Großkompostierung abgebaut werden. Die Prüfung von BAWs erfolgt durch die DIN-Norm EN 13432. Sie müssen nicht unbedingt aus biologischen Rohstoffen bestehen. Beispiele dafür sind sogenannte Stärke-Blends, beispielsweise auf Maisbasis, oder bestimmte Polyester.

Bei dem biologisch abbaubaren Werkstoff kann es sich um einen biologisch abbaubaren Kunststoff handeln. Beispielsweise handelt es sich um einen biologisch abbaubaren und biobasierten Kunststoff.

Bevorzugt handelt es sich bei dem biologisch abbaubaren Werkstoff um einen in der Natur vorkommenden, kompostierbaren Werkstoff.

Besonders bevorzugt besteht der biologisch abbaubare Werkstoff zumindest teilweise aus eigen-kompostierbarem Material.

Die auch als Rotte oder Verrottung bekannte Kompostierung wird als Teil des Nährstoffkreislaufs bezeichnet. Hierbei wird das organische Material unter Einfluss von Luftsauerstoff von Bodenlebewesen abgebaut. Neben Kohlendioxid werden dabei auch wasserlösliche Mineralstoffe freigesetzt. Diese wirken als Dünger. Ein Teil der bei diesem Abbau entstehenden Zwischenprodukte wird zu Humus umgewandelt.

Bei dem biologisch abbaubaren Werkstoff kann es sich beispielsweise um folgende Materialien handeln:
- einen biologisch abbaubaren Kunststoff, und/oder
- einen biologisch abbaubaren und biobasierten Kunststoff, und/oder
- ein festes Material der Polymilchsäure, und/oder
- Cellulose, und/oder
- Celluloseester, und/oder
- Celluloid

Der biologisch abbaubare Werkstoff kann alternativ oder zusätzlich auf den genannten Varianten basieren. Alternativ oder zusätzlich kann der biologisch abbaubare Werkstoff die genannten Varianten umfassen.

Vorteilhaft kann der als Basis bezeichnete Plombenkörper 02 bei allen beschriebenen Ausgestaltungen vollständig oder teilweise aus einem wasserdichten Material, nämlich auf Cellulosebasis, hergestellt sein.

Alternativ oder zusätzlich kann die Basis oder Teile von ihr aus wasserfestem Papier oder Pappe hergestellt sein.

Bei dem Plombenband 03 kann es sich um ein flexibles oder biegeelastisches Band handeln. Alternativ ist denkbar, dass es sich dabei um ein biegeschlaffes Band handelt.

Als Plombenband 03, beispielsweise in Form eines flexiblen, zu einer Schlaufe festlegbaren Elements, kann ein Faden, eine Schnur oder ein Band sein, und zwar aus pflanzlichen Rohstoffen.

Das Plombenband 03 kann alternativ oder zusätzlich aus natürlichem, biobasiertem biologisch abbaubarem Polymer bestehen.

Grundsätzlich können der Plombenkörper und das Plombenband aus demselben biologisch abbaubaren Werkstoff hergestellt sein.

Auch ein eventuell zur Verplombung vorgesehener Klebestreifen kann einen biobasierten, biologisch abbaubaren Kunststoff umfassen.

Ein solcher Klebestreifen kann von der Plombe umfasst sein. Alternativ kann der Klebestreifen zur Herstellung einer Verplombung vorgesehen sein. Der eventuell vorgesehene Klebestreifen kann bereits an der Plombe angeordnet sein. Der Klebestreifen kann alternativ getrennt von der Plombe aufbewahrt und erst bei der Herstellung der Verplombung eingebracht werden. Bis zu seiner Verwendung kann der Klebestreifen mit einer Schutzschicht bedeckt sein. Die Schutzschicht kann abziehbar sein. Eine solche abziehbare Schutzschicht auf einer Klebeschicht wird auch als Abreißschicht bezeichnet.

Ebenso wichtig ist hervorzuheben, dass der Begriff Plombenband 03 ein strangförmiges Element mit einer größten Erstreckung ist.

Das strangförmige Element kann mit beliebiger Geometrie seines Querschnitts quer zur Erstreckung des Strangs ausgebildet sein.

Der Begriff Band beschränkt in diesem Zusammenhang den Querschnitt weder auf eine flache Geometrie, noch auf eine kreisrunde Geometrie.

Bei Vorliegen einer flachen Geometrie wäre das Band am ehesten als ein Streifen beschreibbar.

Bei Vorliegen einer kreisrunden Geometrie wäre das Band am ehesten als ein Seil oder eine Schnur oder ein Draht beschreibbar.

Es sind für die vorliegende Plombe 01 sowohl die genannten als auch die dazwischenliegenden Geometrien des Querschnitts des strangförmigen Elements verwendbar.

Das Plombenband 03 kann biegeschlaff, biegeelastisch, biegeweich oder biegesteif ausgeführt sein, ohne Einschränkung der grundsätzlichen Verwendbarkeit der Plombe 01.

Mit der Plombe 01 wird das Ziel erreicht, eine schädliche Beeinträchtigung der Umgebung so gering wie möglich zu gestalten.

Eine derart schädliche Beeinträchtigung der Umgebung wird in der Regel durch einen spontanen Eintrag einer nicht mehr benötigten Plombe 01 in die Umgebung erreicht. Auch eine ordnungsgemäße Entsorgung einer herkömmlichen Plombe führt zur Belastung der Umwelt.

Dabei ist zu anzumerken, dass der spontane Eintrag grundsätzlich nicht ausgeschlossen werden kann.

Durch die biologisch abbaubare Ausgestaltung der Plombe ist die Belastung der Umwelt kaum schädlich.

Der Plombenkörper 02 ist zumindest mit zwei, um den Umfang der Schlaufe 30 voneinander beabstandeten Partien des Plombenbands 03 lösbar verbindbar.

In einem in Fig. 10, Fig. 11, Fig. 12, Fig. 13 dargestellten Betriebszustand ist der Plombenkörper 02 mit den Partien des Plombenbands 03 unlösbar versiegelbar. Es handelt sich um wenigstens zwei um den Umfang der Schlaufe 30 voneinander beabstandete Teile.

Bei den um den Umfang der Schlaufe 30 voneinander beabstandeten Partien des Plombenbands 03 handelt es sich um die Endpartien 31, 32 des Plombenbands 03. Eine vorteilhafte Ausgestaltung der Plombe 01 sieht vor, dass der Plombenkörper 02 aus zwei Teilen 21, 22 besteht. Diese Teile sind miteinander in einem Betriebszustand unlösbar versiegelbar.

Besonders bevorzugt besteht der Plombenkörper 02 aus zwei gelenkig miteinander verbindbaren Teilen 21, 22.

Die zwei miteinander in einem in Fig. 10, Fig. 11, Fig. 12 und Fig. 13 dargestellten Betriebszustand unlösbar versiegelbar verbindbaren Teile 21, 22 können miteinander verklebbar sein.

Dies dient der Herstellung einer Verplombung anhand der Plombe 01.

Hierbei wird diese aus ihrern in Fig. 1, Fig. 2, Fig. 3, Fig. 4, Fig. 5 dargestellten Ausgangszustand in ihren in Fig. 6, Fig. 7, Fig. 8, Fig. 9 dargestellten Zwischenzustand überführt.

Dabei ist zunächst nur eine Endpartie 32 an dem Plombenkörper 02 festgelegt. Hierzu wird die andere Endpartie 31 durch zwei gegenüberliegende Öffnungen hindurchgeführt und zu einer Bucht gelegt.

Anschließend wird das Plombenband 03 mittels des Plombenkörpers 02 zu einer Schlaufe 30 festgelegt.

Der Betriebszustand der Plombe 01 ist in Fig. 10, Fig. 11, Fig. 12, Fig. 13 dargestellt. Die sich beim Öffnen voneinander entfernenden Elemente können beispielsweise Teil eines Verschlusses eines zu verplombenden Behälters oder Geräts sein.

Zum Festlegen kann eine Klebeschicht verwendet werden, die zwischen den miteinander in einem in Fig. 10, Fig. 11, Fig. 12, Fig. 13 dargestellten Teilen angeordnet ist.

Die Schlaufe 30 ist dabei so bemessen, dass sie nur irreversibel zerstörbar ist.

Das Entfernen der Plombe 1 ist erforderlich, beispielsweise um Zugang zu einem Behälterinhalt oder zu einem Gerät zu erlangen, oder um eine Einstellung zu verändern.

Die Endpartie 32 ist zwischen den beiden Teilen 21, 22 des Plombenkörpers 02 angeordnet.

Die andere Partie, beispielsweise die Endpartie 31, durchquert ein erstes Teil 21 der beiden Teile 21, 22 des Plombenkörpers 02. Der Plombenkörper 02 ist mit diesem fest verbindbar.

Das erste Teil 21 weiß erfindungsgemäß hierzu mindestens zwei durchgehende Öffnungen 23, 24 mit einer dazwischenliegenden Nut 25 aufweisen. Die Öffnungen 23, 24 sind an die Abmessungen des Plombenbands 03 angepasst.

Das Plombenband 03 ist hierbei als flexibles Mittel und/oder flexibler Streifen mit zwei Endpartien verwendet, wie etwa ein Seil und/oder eine Kette.

Die durchgehenden Öffnungen 23, 24 mit der dazwischenliegenden Nut 25 sind e an die Querschnittsabmessungen des Plombenbands 03 angepasst. Vorteilhaft ragt im Betriebszustand (in Fig. 10, Fig. 11, Fig. 12, Fig. 13 dargestellt) der Plombenkörper 02 heraus. Der Plombenkörper 02 ist als ein Siegel verwendbare Plombe 01 ausgebildet.

Der Plombenkörper 02 kann mit gelenkig miteinander verbundenen Teilen 21, 22 ausgestaltet sein.

Die beiden Teile 21, 22 können in Form von Buchdeckeln ausgestattet sein.

Es handelt sich um einen Buchdeckel, der zwei entlang eines als Buchrücken dienenden Biegestreifens 23 aufweist.

Eine erste Partie, z. B. Endpartie 32 des Plombenbands 03, kann in einem ersten Buchdeckel oder am Biegestreifen 20 festgelegt sein.

In dem ersten Teil 21 sind zusätzlich mittels der Nut 25 (eines Durchführungskanals) ineinander übergehende Öffnungen 23, 24 vorgesehen. Die Öffnungen 23, 24 sind in Form von Durchführungsöffnungen für die verbleibende Partie des Plombenbands 03 vorgesehen.

Gegenüberliegend dem Durchführungskanal können in dem verbleibenden Buchdeckel hineinragende Keile angeordnet sein. Diese Keile können beim Zusammenklappen der Buchdeckel ein Labyrinth in dem Durchführungskanal bilden.

In zusammengeklapptem und miteinander beispielsweise verklebtem Betriebszustand der beiden Teile 21, 22 liegt das Labyrinth im Durchführungskanal fest.

Bei der verbleibenden Partie handelt es sich um die verbleibende Endpartie 31 des Plombenbands 03.

Hierdurch kann ein ökologisches Indikativsiegel in Form einer Plombe 01 aus biologisch abbaubaren Materialien geschaffen werden,

Dieses Indikativsiegel umfasst ein flexibles, zu einer Schlaufe 30 festlegbares Element als Plombenband 03.

Das Indikativsiegel umfasst eine Basis in Form eines spiegelsymmetrischen Blatts. Das Blatt ist mit einer Innen- und Außenfläche als Plombenkörper 02 ausgebildet, dessen Basis nach innen gebogen werden kann.

Die Basis besteht hierzu aus dem ersten und dem zweiten Teil 21, 22.

Das erste und das zweite Teil 21, 22 sind entlang der Symmetrielinie durch einen Biegestreifen 20 getrennt.

An der Innenfläche des Biegestreifens 20 ist eine Endpartie 32 des flexiblen Elements befestigt.

Im ersten Teil 21 der Basis sind zwei kurz auch als Löcher bezeichnete Öffnungen 23, 24 ausgebildet.

Die Öffnungen 23, 24 sind zum Durchziehen einer freien verbleibenden anderen Endpartie 31 des flexiblen Elements vorgesehen.

Die Endpartie 31 dient zur Überführung der Plombe 01 aus deren Anfangszustand (Fig. 1, Fig. 2, Fig. 3, Fig. 4, Fig. 5) über deren Zwischenzustand (Fig. 6, Fig. 7, Fig. 8, Fig. 9) zum Betriebszustand (Fig. 10, Fig. 11, Fig. 12, Fig. 13).

Ausgehend vom Ausgangszustand kann die Plombierung hergestellt werden.

Auf der Innenfläche des ersten Teils 21 der Basis ist eine Platte mit einer Dicke angebracht. Die Platte überschreitet die Dicke des flexiblen Elements nicht.

In der Platte ist eine Nut 25 ausgeführt.

Diese umfasst die Löcher zum Durchziehen einer freien verbleibenden Endpartie 31 des flexiblen umfassenden Elements bei der Plombierung.

Auf der Innenfläche des zweiten Teils 22 der Basis ist eine Klebstoffschicht mit Restklebrigkeit aufgetragen. Diese Klebstoffschicht ist mit einer schützenden Abreißschicht bedeckt.

Die Außenfläche der Teile 21, 22 der Basis ist so beschaffen, dass darauf eine Identifikations- oder eine andere Art von Information aufgetragen werden kann.

In der Basis, beispielsweise im ersten Teil 21, können zwischen den Löchern Perforationen 26 ausgebildet sein.

Wichtig ist hervorzuheben, dass für jede Endpartie 31, 32 des Plombenbands 03 eine Öffnung 23, 24 mit einer Nut 25 vorgesehen ist. Diese Nut 25 ist bis zu einem gegenüberliegenden Rand ausgebildet.

Hierdurch werden beide Endpartien 31, 32 des Plombenbands 03 zum Verplomben durch eine eigene Öffnung 23, 24 in eine eigene Nut 25 eingelegt.

Beim Zusammenklappen der beiden Teile 21, 22 des Plombenkörpers 02 werden diese Teile 21, 22 in der jeweiligen eigenen Nut 25 festgelegt.

Auch hierdurch wird ein ökologisches Indikativsiegel in Form einer Plombe 01 aus biologisch abbaubaren Materialien geschaffen.

Dieses Indikativsiegel umfasst als Plombenband 03 ebenso ein flexibles, zu einer Schlaufe 30 festlegbares Element.

Dieses Indikativsiegel umfasst ebenfalls eine Basis in Form eines spiegelsymmetrischen Blatts mit einer Innenfläche 202 und einer Außenfläche 201.

Auch bei diesem Indikativsiegel kann die Basis nach innen gebogen werden.

Die Basis besteht aus dem ersten Teil 21 und dem zweiten Teil 22.

Das erste Teil 21 und das zweite Teil 22 sind entlang einer Symmetrielinie durch einen Biegestreifen 20 getrennt.

An der Innenfläche des Biegestreifens 20 ist eine Endpartie 32 des flexiblen Elements befestigt.

Bei dem Blatt kann es sich um einen Plombenkörpermantel 200 handeln, (Fig. 14, Fig. 15, Fig. 16).

Eine Platte ist als erstes Teil 21 der Basis auf der Innenfläche befestigt.

Bei der Platte kann es sich um einen Plombenkern 203 handeln (Fig. 14, Fig. 15, Fig. 16).

In der Platte sind zwei Durchgangslöcher zum Durchziehen einer verbleibenden freien Endpartie 31 ausgebildet. Die Endpartie 31 ist flexibel und kann zu einer als Schlaufe geformtes Element gebildet sein.

Zwischen den Löchern ist eine Ausnehmung ausgebildet. Die Ausnehmung ist bevorzugt in Gestalt einer in eingelassenen Nut 25 ausgebildet. Dadurch kann die Schlaufe 30 bei Plombierung festgelegt werden.

Auch für jedes Loch ist je eine Durchgangsnut 25 ausgebildet, welche vom Loch bis zum nächsten Rand der Basis führt.

Auf der Innenfläche des zweiten Teils 22 der Basis ist eine Klebstoffschicht mit Restklebrigkeit aufgetragen.

Diese ist mit einer schützenden Abreißschicht bedeckt.

Die Abreißschicht hat eine Schutzschicht (Fig. 14c, Fig 15 und Fig. 16).

Die Außenfläche der Basis ist mit der Möglichkeit ausgeführt, darauf eine Identifikations- oder eine andere Art von Information, ein biologisch abbaubares Schutz-Etikett oder ein RFID-Etikett, aufzutragen.

Bei einer solchen Außenfläche kann es sich beispielsweise um eine Außenfläche 201 der in den gezeigten Ausführungsbeispielen (Fig. 14, Fig. 15, Fig. 16) erwähnten Plombenkörpermantel 200 handeln.

Bei der Plombe 01 (Fig. 14, Fig. 15, Fig. 16) besteht der Plombenkörper 02 aus drei zumindest miteinander in einem Betriebszustand unlösbar versiegelbar verbindbaren Teilen 21, 22.

Das Plombenband 03 ist mit einer ersten Partie, vorzugsweise mit einer ersten Endpartie 32 zwischen einem ersten Teil 21 und einem zweiten Teil 22 des Plombenkörpers 02 angeordnet.

Vorteilhaft ist die erste Endpartie 32 im Bereich eines Biegestreifens 20 angeordnet.

Der Biegestreifen 20 verbindet das erste Teil 21 mit dem zweiten Teil 22. Das zweite Teil 22 umfasst zwei mit einem weiteren Biegestreifen 20 miteinander verbundene zweite Teile 28, 29.

Der Plombenkörper 02 (Fig. 14, Fig. 15, Fig. 16) umfasst einen Plombenkörpermantel 200.

Dieser kann auf seiner gezeigten Außenfläche 201 (Fig. 14a) mit Informationen versehen sein. Diese Information ist mit einer schematisch erkennbaren Kontrollnummer dargestellt (Fig. 16).

Auch eine der Außenfläche 201 des Plornbenkörpermantefs 200 gegenüberliegende Innenfläche 202 kann mit Informationen versehen sein.

Das kann beispielsweise eine Anleitung zur Herstellung der Verplombung, beispielsweise in einer Schritt-für Schritt-Nummerierungsfolge, sein.

Auf der innenfläche 202 des Plombenkörpermantels 200 ist ein Plombenkern 203 angeordnet.

Der Plombenkern 203 ist vorteilhaft im Bereich des von dem zweiten Teil 22 des Plombenkörpers 02 umfassten Abschnitts angeordnet.

Besonders vorteilhaft kann der Plombenkern 203 mittels eines Plombenkernklebeblatts 204 auf der Innenfläche 202 des Plombenkörpermantels 200 befestigt sein. Das Plombenkernklebeblatt 204 ist hierzu zwischen dem Plombenkern 203 und der Innenfläche 202 des Plombenkörpermantels 200 angeordnet.

Ferner kann ein weiteres Plombenkernklebeblatt 205 auf der dem Plombenkernklebeblatt 204 abgewandten Seite des Plombenkerns 203 angeordnet sein.

Bei dem Plombenkernklebeblatt 204 handelt es sich um ein erstes Plombenkernklebeblatt 204. Bei dem Plombenkernklebeblatt 205 handelt es sich um ein zweites Plombenkernklebeblatt 205,

Es können mehrere zweite Plombenkernklebeblätter 205 vorgesehen sein, um ein besonders manipulationssicheres Verplomben sicherzustellen (Fig. 15).

Wichtig ist, dass der Begriff Klebeblatt stellvertretend für eine Vielzahl denkbarer Ausgestaltungen von Klebeschichten steht.

Vorteilhaft handelt es sich jedoch zumindest beim zweiten Plombenkernklebeblatt 205 um eine bis zu ihrer Verwendung beispielsweise von einer abziehbaren Schutzschicht bedeckte Klebeschicht.

Eine bedeckte Klebeschicht ist z. B. durch eine Abziehlasche 206 dargestellt (Fig. 14c, Fig. 15, Fig. 16).

Der Plombenkern 203 weist umlaufende Schmalseiten 207, 208, 209, 210 sowie eine Ober- und eine Unterseite auf. Diese sind mittels der Schmalseiten 207, 208, 209, 210 miteinander verbunden.

Der Plombenkern 203 ist mit einer Nut 25 versehen. Die Nut 25 kann als ein Schlitz im Plombenkörper 203 ausgeführt sein. Die Nut 25 reicht hierbei von der Oberseite bis zur Unterseite des Plombenkörpers 203.

Die Nut 25 führt ausgehend von einer Schmalseite 207 des Plombenkerns 203 in den Plombenkörper 203 hinein.

Die Nut 25 endet bei der Plombe 01 im Plombenkörper 203 noch vor Erreichen dessen der Schmalseite 207 gegenüberliegenden Schmalseite 208 (Fig. 14, Fig. 15, Fig. 16).

Die Nut 25 dient einer Führung der im Ausgangszustand freien Endpartie 31 des Plombenbands 03 im Plombenkörper 02.

Eine Mündungsweitung 211 kann zur Erleichterung des Einführens der freien Endpartie 31 des Plombenbands 03 in die Nut 25 vorgesehen sein.

Der Plombenkörpermantel 200 kann in einem zur Überführung in den Betriebszustand auf den Plombenkern 203 klappbaren Abschnitt mit Öffnungen 23, 24 bildenden Löchern versehen sein.

Diese Öffnungen 23, 24 dienen in Verbindung mit der Nut 25 der korrekten Führung der Endpartie 31 des Plombenbands 03.

Vorteilhaft handelt es sich bei dem auf den Plombenkern 203 klappbaren Abschnitt um den von dem ersten Teil 21 des Plombenkörpers 02 umfassten Abschnitt des Plombenkörpermantels 200.

Eine oder mehrere zusätzliche Öffnungen 27 können der zusätzlichen Hindurchführung der Endpartie 31 und/oder einer äußeren Kontrolle deren korrekter Durchführung dienen.

Eine Hilfsmarkierung kann die Richtung der zur Herstellung einer Schlaufe 30 innerhalb des Plombenkörpers 02 zu führenden Endpartie 31 des Plombenbands 03 angeben.

Zusätzlich können im noch nicht dem Betriebszustand entsprechenden aufgeklappten Zustand des Plombenkörpers 02 beispielsweise Zahlen auf einzelnen Abschnitten des Plombenkörpermantels 200 und/oder im Bereich der Öffnungen 23, 24 vorgesehen sein.

Dadurch kann ein korrektes Hindurchführen der Endpartie 31 durch den Plombenkörper 02 durch einfaches Folgen der aufsteigenden Nummerierung ermöglicht werden.

Vorteilhaft kann zumindest auf der Außenfläche eines der Teile 21, 22 des auch als Basis bezeichneten Plombenkörpers 02 ein Temperaturindikator aufgetragen sein.

Wichtig ist hervorzuheben, dass die erwähnten Keile bei allen Ausgestaltungen der Plombe 01 zum Einsatz kommen können.

Insbesondere vorteilhaft sind die Keile in Verbindung mit einem beispielsweise durch eine Nut 25 gebildeten Durchführungskanal.

In diesem bilden die Keile ein Labyrinth. Das Labyrinth legt eine Endpartie 31, 32, vorzugsweise die verbleibende freie andere Endpartie 31 des Plombenbands 03, unverrückbar im Durchführungskanal fest.

Die Plombe 01 kann alternativ oder zusätzlich einzelne oder eine Kombination mehrere der beschriebenen Merkmale aufweisen.

Die Plombe 01 kann etwa zur Versiegelung von Behältnissen oder Geräten, beispielsweise an deren Gehäuse, beispielsweise im internationalen Waren- und Güterverkehr, als Zollsiegel Verwendung finden.

Es kann durch das als Verplomben bezeichnete Anbringen der Plombe 01 am Verschluss eines Behälters oder Geräts festgestellt werden, ob ein Behälter oder ein Gerät nach dem Verplomben unbefugt geöffnet wurde.

Ebenso verhält es sich bei andersartigen Verwendungen der Plombe 01.

Sie kann beispielsweise als Nachweis dafür dienen, dass eine vorgenommene Einstellung an einem Gerät nicht verändert wurde, außerdem als Eintrittskartenersatz, zur Unbrauchbarmachung technischer Anschlüsse frei von deren Deaktivierung sowie bei militärischen Einrichtungen.

Die Erfindung ist nicht durch die Beschreibung anhand der Ausführungsbeispiele beschränkt.

Vielmehr umfasst die Erfindung jedes neue Merkmal sowie jede Kombination von Merkmalen.

Dies beinhaltet insbesondere jede Kombination von Merkmalen in den Ansprüchen, auch wenn dieses Merkmal oder diese Kombination selbst nicht explizit in den Ansprüchen oder Ausführungsbeispielen angegeben ist.

Die Erfindung ist insbesondere im Bereich der Herstellung von Zollsiegeln und dergleichen gewerblich anwendbar.

Die Erfindung ist darüber hinaus im Bereich der Herstellung und dem Betrieb von Anlagen und Vorrichtungen gewerblich anwendbar, bei denen eine unbefugt vorgenommene Änderung einer Einstellung oder ein unbefugter Zugang anhand des Bruchs eines Siegels nachträglich feststellbar sein muss.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Plombe
- 02: Plombenkörper
- 03: Plombenband

- 20: Biegestreifen
- 21: Teil
- 22: Teil
- 23: Öffnung
- 24: Öffnung
- 25: Nut
- 26: Perforation
- 27: Öffnung
- 28: zweites Teil
- 29: zweites Teil
- 30: Schlaufe
- 31: Endpartie
- 32: Endpartie

- 200: Plombenkörpermantel
- 201: Außenfläche
- 202: Innenfläche
- 203: Plombenkern
- 204: erstes Plombenkernklebeblatt
- 205: zweites Plombenkernklebeblatt
- 206: Lasche
- 207: Schmalseite
- 208: Schmalseite
- 209: Schmalseite
- 210: Schmalseite
- 211: Mündungsweitung

## Patentansprüche

1. Plombe (01) mit einem Plombenkörper (02) und einem Plombenband (03), wobei zumindest der Plombenkörper (02) aus einem biologisch abbaubaren Werkstoff besteht, der Plombenkörper (02) zumindest mit zwei voneinander beabstandeten Partien (31, 32) des Plombenbands (03) lösbar verbindbar und in einem Betriebszustand unlösbar versiegelbar ist und der Plombenkörper (02) aus wenigstens zwei zumindest miteinander in einem Betriebszustand unlösbar versiegelbar verbindbaren Teilen (21, 22) besteht,
**dadurch gekennzeichnet,**
**dass** die eine Partie (32) zwischen den beiden Teilen (21, 22) des Plombenkörpers (02) angeordnet ist, während die andere Partie (31) ein erstes Teil (21) der beiden Teile (21, 22) durchquert und mit diesem fest verbindbar ist, wobei das erste Teil (21) mindestens zwei durchgehende Öffnungen (23, 24) mit einer dazwischenliegenden Nut (25) aufweist, die an die Abmessungen des Plombenbands (03) angepasst sind.

2. Plombe nach Anspruch 1,
**dadurch gekennzeichnet,**
**dass** der biologisch abbaubare Werkstoff zumindest teilweise aus eigen-kompostierbarem Material besteht.

3. Plombe nach Anspruch 1 oder 2,
**dadurch gekennzeichnet,**
**dass** der biologisch abbaubare Werkstoff
- einen biologisch abbaubaren Kunststoff und/oder
- einen biologisch abbaubaren und biobasierten Kunststoff und/oder
- eine Polymilchsäure und/oder
- Cellulose und/oder
- Celluloseester und/oder
- Celluloid
umfasst,
**dass** der biologisch abbaubare Werkstoff hierauf basiert oder
**dass** es sich bei dem biologisch abbaubaren Werkstoff hierum handelt.

4. Plombe nach einem der voranstehenden Ansprüche,
**dadurch gekennzeichnet,**
**dass** der Plombenkörper (02) aus zwei gelenkig miteinander verbindbaren Teilen (21, 22) besteht.

5. Plombe nach einem der voranstehenden Ansprüche,
**dadurch gekennzeichnet,**
**dass** die zwei miteinander in einem Betriebszustand unlösbar versiegelbar verbindbaren Teile (21, 22) miteinander verklebbar sind.

6. Plombe nach Anspruch 5,
**dadurch gekennzeichnet,**
**dass** eine Klebeschicht zwischen den miteinander in einem Betriebszustand unlösbar versiegelbar verbundenen Teilen (21, 22) angeordnet ist.

7. Plombe nach einem der voranstehenden Ansprüche,
**dadurch gekennzeichnet,**
**dass** im Betriebszustand der Plombe (01) zumindest die andere Endpartie (31) aus dem Plombenkörper (02) herausragt.

8. Plombe nach einem der voranstehenden Ansprüche,
**dadurch gekennzeichnet,**
**dass** der Plombenkörper (02) einen Plombenkörpermantel (200) und wenigstens einen Plombenkern (203) umfasst.

9. Plombe nach Anspruch 8,
**dadurch gekennzeichnet,**
**dass** der Plombenkern (203) mit einer Nut (25) versehen ist.

10. Plombe nach Anspruch 9,
**dadurch gekennzeichnet,**
**dass** die Nut (25) von einer Schmalseite (207) des Plombenkerns (203) ausgehend vor Erreichen einer gegenüberliegenden Schmalseite (208) endet.

11. Plombe nach einem der Ansprüche 1 bis 10,
**dadurch gekennzeichnet,**
**dass** die Nut (25) mit den Partien (31, 32) formschlüssig verbindbar ist.

12. Plombe nach einem der Ansprüche 1 bis 11,
**dadurch gekennzeichnet,**
**dass** die Klebeschicht als Zweikomponentenkleber aus biologisch abbaubarem Material hergestellt ist.

## Claims

1. Seal (01) with a seal body (02) and a seal band (03),
wherein at least the seal body (02) consists of a biodegradable material, the seal body (02) is releasably connectable to at least two spaced-apart portions (31, 32) of the seal band (03) and is non-releasably sealable in an operating state, and the seal body (02) consists of at least two parts (21, 22)which are non-releasably sealably connectable to each other in an operating state,
**characterised in that**
**in that** the one portion (32) is arranged between the two parts (21, 22) of the seal body (02), while the other portion (31) passes through a first part (21) of the two parts (21, 22) and can be firmly connected thereto.

2. Seal according to claim 1,
**characterised in that**
that the biodegradable material consists at least partially of self-compostable material.

3. Seal according to claim 1 or 2,
**characterised in that**
that the biodegradable material comprises
- a biodegradable plastic and/or
- a biodegradable and bio-based plastic and/or
- a polylactic acid and/or
- Cellulose and/or
- Cellulose esters and/or
- Celluloid,
that the biodegradable material is based on the aforementioned or
that this is what the biodegradable material is made of.

4. Seal according to any of the preceding claims,
**characterised in that**
**in that** the seal body (02) consists of two parts (21, 22) which can be connected to one another in an articulated manner.

5. Seal according to any of the preceding claims,
**characterised in that**
**in that** the two parts (21, 22) which can be connected to one another in a non-detachably sealable manner in an operating state can be bonded to one another.

6. Seal according to claim 5,
**characterised in that**
**in that** an adhesive layer is arranged between the parts (21, 22) which are non-detachably sealed to one another in an operating state.

7. Seal according to any of the preceding claims,
**characterised in that**
**in that** a first part (21) of the two parts (21, 22) of the seal body (02) has at least two through-openings (23, 24) with an intermediate groove (25) which are adapted to the dimensions of the seal band (03), and
that in the operating state of the seal (01) at least the other end portion (31) protrudes from the seal body (02).

8. Seal according to any of the preceding claims,
**characterised in that**
that the seal body (02) comprises a seal body jacket (200) and at least one seal core (203).

9. Seal according to claim 8,
**characterised in that**
that the seal core (203) is provided with a groove (25).

10. Seal according to claim 9,
**characterised in that**
**in that** the groove (25), starting from a narrow side (207) of the seal core (203), ends before reaching an opposite narrow side (208).

11. Seal according to any one of claims 1 to 10,
**characterised in that**
**in that** the groove (25) can be positively connected to the parts (31, 32).

12. Seal according to any one of claims 1 to 11,
**characterised in that**
that the adhesive layer is made of biodegradable material as a two-component adhesive.

## Revendications

1. Scellé (01) avec un corps de scellé (02) et une bande de scellé (03),
dans lequel au moins le corps de scellé (02) est constitué d'un matériau biodégradable, le corps de scellé (02) est relié de manière détachable à au moins deux portions espacées (31, 32) de la bande de scellé (03) et est scellable de manière non détachable dans un état de fonctionnement, et le corps de scellé (02) est constitué d'au moins deux parties (21, 22) qui sont reliables de manière scellable non détachable l'une à l'autre dans un état de fonctionnement,
**caractérisé en ce que**
**en ce que** l'une des portions (32) est disposée entre les deux parties (21, 22) du corps de scellé (02), tandis que l'autre portion (31) traverse une première partie (21) des deux parties (21, 22) et peut y être fermement reliée.

2. Scellé selon la revendication 1,
**caractérisé en ce que**
que le matériau biodégradable est constitué au moins partiellement de matériau auto-compostable.

3. Scellé selon la revendication 1 ou 2,
**caractérisé en ce que**
que le matériau biodégradable comprend
• un plastique biodégradable et/ou
• un plastique biodégradable et biosourcé et/ou
• un acide polylactique et/ou
• de la cellulose et/ou
• des esters de cellulose et/ou
• du celluloïd,
que le matériau biodégradable est basé sur les éléments susmentionnés ou que c'est de cela qu'est fait le matériau biodégradable.

4. Scellé selon l'une quelconque des revendications précédentes,
**caractérisé en ce que**
**en ce que** le corps de scellé (02) est constitué de deux parties (21, 22) qui peuvent être reliées l'une à l'autre de manière articulée.

5. Scellé selon l'une quelconque des revendications précédentes,
**caractérisé en ce que**
**en ce que** les deux parties (21, 22) qui peuvent être reliées l'une à l'autre de manière scellable non détachable dans un état de fonctionnement peuvent être collées l'une à l'autre.

6. Scellé selon la revendication 5,
**caractérisé en ce que**
**en ce qu'**une couche adhésive est disposée entre les parties (21, 22) qui sont scellées de manière non détachable l'une à l'autre dans un état de fonctionnement.

7. Scellé selon l'une quelconque des revendications précédentes,
**caractérisé en ce que**
**en ce qu'**une première partie (21) des deux parties (21, 22) du corps de scellé (02) présente au moins deux ouvertures traversantes (23, 24) avec une rainure intermédiaire (25) qui sont adaptées aux dimensions de la bande de scellé (03), et
que dans l'état de fonctionnement du scellé (01) au moins l'autre portion d'extrémité (31) dépasse du corps de scellé (02).

8. Scellé selon l'une quelconque des revendications précédentes,
**caractérisé en ce que**
que le corps de scellé (02) comprend une enveloppe de corps de scellé (200) et au moins un noyau de scellé (203).

9. Scellé selon la revendication 8,
**caractérisé en ce que**
que le noyau de scellé (203) est pourvu d'une rainure (25).

10. Scellé selon la revendication 9,
**caractérisé en ce que**
**en ce que** la rainure (25), partant d'un côté étroit (207) du noyau de scellé (203), se termine avant d'atteindre un côté étroit opposé (208).

11. Scellé selon l'une quelconque des revendications 1 à 10,
**caractérisé en ce que**
**en ce que** la rainure (25) peut être reliée de manière positive aux parties (31, 32).

12. Scellé selon l'une quelconque des revendications 1 à 11,
**caractérisé en ce que**
que la couche adhésive est faite de matériau biodégradable comme adhésif bi-composant.
